# EUROPÄISCHE PATENTSCHRIFT

(11) **EP 2 644 370 B1**
(45) Veröffentlichungstag und Bekanntmachung des Hinweises auf die Patenterteilung: **18.05.2022**
(21) Anmeldenummer: 13159686.8
(22) Anmeldetag: 18.03.2013
(51) Int. Cl.: B32B 5/02, B32B 5/12, B32B 5/26, B32B 5/28, B32B 27/12, B32B 27/28, B32B 27/30, B32B 27/40, B60J 11/00

(54) **Verwendung eines Flächengebildes als Rollomaterial und/oder als Kaschiermaterial**
Use of a fabric sheet as roller material and/or as laminating material
Utilisation d'une structure plate en tant que matériau de store et/ou en tant que matériau de revêtement

(30) Priorität: 26.03.2012 DE 102012006077
(43) Veröffentlichungstag der Anmeldung: 02.10.2013
(73) Patentinhaber: Hornschuch Stolzenau GmbH, 31592 Stolzenau (DE)
(72) Erfinder: Oppermann, Horst, 31595 Steyerberg (DE); Fleig, Lothar, 31582 Nienburg (DE)
(74) Vertreter: Continental Corporation

(56) Entgegenhaltungen:
- EP-A1- 1 782 946
- US-A- 3 734 812
- US-B2- 6 897 170

## Beschreibung

Die vorliegende Erfindung betrifft die Verwendung eines Flächengebildes als Rollomaterial und/oder als Kaschiermaterial.

Als beschichtbare Trägermaterialien, beispielsweise zur Ausgestaltung der Innenräume eines Automobils, insbesondere zur Verwendung als Rollomaterial für Laderaumabdeckungen und/oder als Kaschiermaterial für Innenraumflächen von Fahrzeugen, werden üblicherweise Gewebe aus Multifilamentgarnen verwendet. Da diese Garne einen runden Querschnitt besitzen, weisen sie in der verwebten Anordnung als Flächengebilde eine hohe Dicke auf. Bei einer Anwendung als Rollomaterial ist eine hohe Dicke jedoch von besonderem Nachteil, da sich hierdurch beim Aufwickeln des Rollos ein hohes Volumen ausbildet. Desweiteren zeichnet sich die Gewebegrundstruktur stark auf einer möglichen Beschichtung ab. Grundsätzlich ist eine sichtbare Gewebegrundstruktur aber unerwünscht, da Automobilinnenraummaterialien fast ausnahmslos mit einer Narbe versehen werden, deren Erscheinungsbild unbeeinträchtigt von der Gewebegrundstruktur bleiben soll.

Um die im Vorangehenden genannten Nachteile zu überwinden, wird nach gegenwärtigem Stand der Technik eine erhebliche Menge an Beschichtungsmaterial mittels geeigneten Verfahren aufgetragen, um die Gewebegrundstruktur auf diese Weise zu verbergen. Dies führt allerdings wiederum zu einer erheblichen Zunahme von Dicke und Gewicht des hergestellten Rollomaterials.

Ein alternatives Verfahren, um die Gewebegrundstruktur aus rundem Garn zu verbergen, ist das Kalandern. Hierbei wird unter Anwendung von Druck und hohen Temperaturen das der Gewebestruktur zugrundeliegende Garn in eine Form mit ovalem Querschnitt gepresst. Hierdurch wird die Dicke des Gewebes verringert und gleichzeitig der Bedarf an notwendiger Beschichtungsmasse reduziert. Der Möglichkeit, das Gewicht und die Dicke des Materials zu reduzieren, sind hierbei jedoch Grenzen gesetzt.

Eine ideal glatte Trägeroberfläche ergibt sich bei der Verwendung von Folien. Ein Abdecken einer Gewebestruktur entfällt in diesem Fall gänzlich. Der Nachteil bei der Verwendung von Folien ist dergestalt, dass diese in einem aufwendigen Herstellungsverfahren angefertigt werden. Ein solches Verfahren verlangt hochwertige Ausgangsmaterialien und erfolgt meist über Breitschlitzextrusion und/oder aufwändiges Kalandern, wobei nur äußerst geringe Abweichungen in den Eigenschaften wie etwa der Dicke der Folien toleriert werden können. Die Anwendung von Sekundärmaterialien ist daher erheblich erschwert. Unter Sekundärmaterialien sind schmelzbare, extrusionsfähige oder über einen Schmelzwalzenkalandar verarbeitbare Polymere zu verstehen, die durch Schreddern aus bereits verwendeten Polymerartikeln - insbesondere Polyesterflaschen - erhalten werden können.

Zudem weisen Materialien aus Folienträgern gegenüber anderen Gewebeträgern ein äußerst schlechtes Weiterreißverhalten auf.

WO 2006/092227 A1 betrifft eine Laderaumabdeckung aus einem flexiblen Flächengebilde. Das Flächengebilde ist hierbei mehrlagig aufgebaut, wobei eine Lage durch ein Vliesgebilde und eine andere Lage durch ein Textilmaterial gebildet sind. Die beschriebene Laderaumabdeckung ist geeignet zum Einsatz in Personenkraftfahrzeugen.

Aus der DE 21 42 681 A ist ein Laminat bekannt, das aus einer Schicht einer Anzahl von aus einem faserbildenden Polymeren hergestellten und in vorgewählten Abständen flach parallel zueinander angeordneten verstreckten Bändern geringer Breite besteht, welche kreuzweise mit einer anderen Schicht einer Anzahl von aus den gleichen Polymeren hergestellten parallel zueinander in vorgewählten Abständen angeordneten verstreckten Bändern geringer Breite mit einem Polymerfilm mit einem niedrigeren Schmelzpunkt als derjenige der Bänder verbunden ist.

Die US 6,897,170 B2 offenbart ein Flächengebilde, das als Verstärkung für Teppiche eingesetzt werden kann.

Die US 8,062,448 B2 offenbart ein Flächengebilde, das aus mehreren Schichten aufgebaut ist. Die einzelnen Schichten sind jeweils aus parallelen Bändern aufgebaut, wobei die Bänder der unterschiedlichen Schichten nicht miteinander verflochten, sondern lediglich aufeinander gelegt sind.

Die EP 2 058 101 A1 beschreibt ein Flächengebilde mit einer Struktur, die erhalten wird, indem einzelne Bänder durch Ausbreiten von Tauen hergestellt werden, wobei diese Bänder dann in verschiedenen Schichten und in unterschiedlichen Winkeln zueinander angeordnet werden.

Die WO 2011/163643 A1 betrifft ein wasserdichtes, atmungsaktives Material, das einen aus Fasern in Schuss- und Kettrichtung gebildeten Schichtaufbau umfasst, wobei das Material ein nicht-verflochtenes Verbundmaterial darstellt.

Die EP 1 782 946 A1 offenbart eine wiederverwendbare Schutzhaube für die Außenoberfläche von Fahrzeugen und Fahrzeugteilen, die ein fahrzeugseitiges gerauhtes Trägermaterial aus einem Bändchengewebe und eine auf das Trägermaterial aufgebrachte Beschichtung auf Basis thermoplastischer Kunststoffe umfasst. Eine Verwendung dieses Flächengebildes im Automobilinnenraum ist in der genannten Druckschrift nicht angesprochen.

Es ist eine Aufgabe der vorliegenden Erfindung, die Verwendung eines Flächengebildes mit speziellem Schichtaufbau, insbesondere im Automobilbereich, zu ermöglichen, welches Flächengebilde die aufgeführten Nachteile des Stands der Technik überwindet, insbesondere ein Flächengebilde ist, das einen Träger umfasst, der die Verwendung deutlich reduzierter Mengen an Beschichtungsmaterial ermöglicht.

Die Aufgabe der Erfindung wird gelöst durch eine Verwendung eines Flächengebildes mit einem Schichtaufbau, umfassend zumindest ein, bevorzugt im Wesentlichen glattes, Gelege und zumindest eine Beschichtung auf zumindest einer Seite des Geleges, wobei das Gelege eine einfache Flächenstruktur ist, die durch Verflechten der Bänder, in einer oder mehreren Lagen, erhalten wird und aus Bändern in Kettrichtung und in Schussrichtung besteht, als Rollomaterial, bevorzugt für eine Laderaumabdeckung von Fahrzeugen, und/oder als Kaschiermaterial für Innenraumflächen von Fahrzeugen.

Erfindungsgemäß weisen die Bänder eine Breite in einem Bereich von 0,1-25 mm, vorzugsweise 0,2-10 mm, besonders bevorzugt 0,5-5 mm, und eine Dicke in einem Bereich von 5-50% der Breite, vorzugsweise 10-30% der Breite auf.

Es ist besonders bevorzugt, dass die Bänder in Kettrichtung eine um den Faktor 0,75 bis 1,5 unterschiedliche Dicke und/oder eine um den Faktor 0,1 bis 10 unterschiedliche Breite aufweisen als die Bänder in Schussrichtung und/oder die jeweiligen Bänder in Kett- bzw. Schussrichtung sich in der Dicke um einen Faktor von höchstens 1,5 und in der Breite um einen Faktor von höchstens 10 voneinander unterscheiden.

Außerdem ist bevorzugt, dass die Bänder im wesentlichen parallel zur Längs- bzw. Querrichtung des Flächengebildes verlaufen oder in einem Winkel von etwa 45 °C zur Längs- bzw. Querrichtung des Flächengebildes angeordnet sind.

Ferner sieht die Erfindung bevorzugt vor, dass das Gelege aus 0,25 bis 4 mal mehr Bändern in Kett- als in Schussrichtung, bezogen auf die gleiche Strecke, besteht.

Weiterhin kann vorgesehen sein, dass entlang jeweils eines Bandes in Kett- und/oder Schussrichtung bis zu vier senkrecht angeordnete Bänder unverflochten vorliegen können.

Besonders bevorzugt vorgesehen ist, dass die Beschichtung zumindest ein Polymer umfasst, vorzugsweise Weich-PVC, Polyurethan, Acrylat und/oder flexibles Silikon.

Es ist besonders bevorzugt, dass die Beschichtung ein Flächengewicht in einem Bereich von 10 - 1.000 g/m² hat, vorzugsweise im Bereich von 30 - 600 g/m².

Außerdem ist bevorzugt, dass die Bänder zumindest ein Polymermaterial, vorzugsweise Polyester, Polypropylen, Polyamid, Polycarbonat, Celluloseacetobutyrat und/oder Polyacrylat und/oder ein vorzugsweise modifiziertes Naturmaterial, umfassen.

Ferner kann vorgesehen sein, dass das Polymermaterial Celluloseacetobutyrat ist.

Das Flächengebilde kann hergestellt werden durch ein Verfahren, das die Schritte umfasst: Bereitstellen eines aus verflochtenen Bändern bestehenden Geleges; Auftragen von Beschichtungsmaterial auf zumindest einer Seite des Geleges; und ggf. Umsetzen des Beschichtungsmaterials in eine bevorzugt im wesentlichen glatte Beschichtung.

Dabei ist besonders bevorzugt, dass in Schritt b) ein die Beschichtung oder deren Vorstufe(n) enthaltendes Beschichtungsmaterial im Streichverfahren aufgetragen wird, wobei das Beschichtungsmaterial vorzugsweise eine Dispersion ist, und wobei das Beschichtungsmaterial anschließend vorzugsweise durch Trocknen, Gelieren und/oder chemisches Vernetzen in eine Beschichtung umgesetzt wird.

Ferner ist bevorzugt, dass das Auftragen in Schritt b) mittels Pulverstreuen und anschließendem Sintern, elektrostatischen Pulverauftrag, Beflocken und/oder Thermokaschieren erfolgt.

Das Flächengebilde kann erfolgreich als Rollomaterial, bevorzugt für eine Laderaumabdeckung von Fahrzeugen, und/oder als Kaschiermaterial für Innenraumflächen von Fahrzeugen eingesetzt werden. Insgesamt ist also auch die Anwendung zu Dekorzwecken im gesamten Automobilinnenbereich denkbar.

Das Auftragen des Beschichtungsmaterials im Streichverfahren kann über eine direkte oder indirekte Beschichtung erfolgen.

Beim Thermokaschieren können bevorzugt vorgefertigte Dekormaterialien auf Basis von Kunststofffolien oder von Textilien eingesetzt werden.

Überraschend wurde erfindungsgemäß festgestellt, dass Flächengebilde, die auf einem Gelege aus Bändern als Trägermaterial basieren, vorteilhaft als Rollomaterialien und/oder als Kaschiermaterial eingesetzt werden können. Mit der Gelegestruktur des Trägers geht ein deutlich reduzierter Bedarf an Beschichtungsmaterial einher, was zu einer deutlich kosten- und herstellungseffizienteren Fertigungsmöglichkeit des Rollo- oder Kaschiermaterials führt. Gleichzeitig wird das Volumen der Rollomaterialien, insbesondere im aufgerollten Zustand, verringert, was eine Verwendung in Automobilen deutlich erleichtert. Ebenso weist der Schichtaufbau eine gegenüber dem Stand der Technik deutlich verbesserte Biegeflexibilität auf. Darüber hinaus zeigt sich bei dem Flächengebilde aufgrund der durch das Gelege erzielten unterbrochenen Grundstruktur ein deutlich verbessertes Weiterreißverhalten als beispielsweise bei einem gesamtflächig kompakt aufgebauten Folienträger.

Als Gelege im Rahmen der vorliegenden Erfindung soll eine einfache Flächenstruktur verstanden werden, die durch Verflechten der Bänder, in einer oder mehreren Lagen, erhalten wird.

Als Gelege im Rahmen der vorliegenden Erfindung soll insbesondere aber auch eine Flächenstruktur verstanden werden, die aus mehreren Lagen parallel angeordneter Bänder besteht und deren einzelne Lagen sich in der Bandorientierung unterscheiden, wobei die Bänder über unterschiedliche Lagen hinweg miteinander verflochten sind.

Zum Herstellen eines solchen Flächengebildes werden Bänder bzw. Bändchen zu einem Gelege durch Verflechten der einzelnen Bänder, zusammengefügt.

Die zu diesem Zweck eingesetzten Bänder können beispielsweise über eine Extrusion von Polymermaterialien, wie Polyester, Polyolefin, vorzugsweise Polypropylen, Polyamid, Polycarbonat oder Polyacrylat hergestellt werden.

Auch ist denkbar, dass die Bänder durch Extrusion von modifizierten, extrudierbaren und/oder kalandrierbaren Material mit Naturnahbasis - z. B. Celluloseacetobutyrat - erstellt werden.

Darüber hinaus können die zu verwendenden Bänder auch durch Zuschnitt aus Folienmaterial hergestellt werden, wobei die Folienmaterialien ebenfalls die oben erwähnten Polymermaterialien oder Naturmaterialien umfassen können.

Schließlich ist auch vorstellbar, dass fehlerhafte Folien oder Sekundärfolien zur Herstellung der Bänder über einen entsprechenden Zuschnitt verwendet werden.

Eine Abschätzung der Glattheit des als Trägermaterials verwendeten Geleges kann durch geometrische Addition der oben angegebenen Dicken der Bänder erhalten werden, wobei eine zusätzliche Dicke von ca. 25 % berücksichtigt werden muss, die sich aus Knick- und Biegeeffekten der verwendeten Bänder ergibt.

Die Länge der jeweiligen Bänder ist nicht begrenzt. Da die Bänder oftmals mit Lauflängen produziert werden, die deutlich über den Ausmaßen des Flächengebildes liegen, ist es vorteilhaft, dass die Länge der Bänder an die Ausmaße des Flächengebildes angepasst wird.

Entsprechend der üblichen Begrifflichkeit werden in der vorliegenden Erfindung Längsbänder als Kettbänder und Querbänder als Schussbänder bezeichnet. Die Kettrichtung ist demnach die Längsrichtung der Bänder, die Schussrichtung deren Querrichtung.

Soweit in den Ansprüchen von Längs- und Querrichtung die Rede ist, bezieht sich dies für rechteckige Flächengebilde auf die den Kanten entsprechenden Richtungen.

Bändergelege, die eine erfindungsgemäße Verwendung erlauben, sind auch kommerziell erhältlich.

Weitere Vorteile der Erfindung zeigen sich auch in den nachfolgend aufgeführten Ausführungsbeispielen.

### Beispiel 1

Ein Bändergelege einer Dicke von ca. 0,25 mm aus Polyesterbändern mit einer jeweiligen Dicke von ca. 0,10 mm und einer Breite des Schussbandes von ca. 1,5 mm und des Kettbandes von ca. 1,0 mm und einer Bänderzahl von 70 in Schussrichtung und 110 in Kettrichtung; einem ungefähren Flächengewicht von 110g/m² und einer Verflechtung von jeweils einem Kettband mit einem Schussband, wurde in einem für PVC-Laderaumabdeckungen üblichen Verfahren, im direkten Streichverfahren mit nachfolgender beidseitiger Lackierung sowie einseitiger Prägung mit einer lederartigen oder technisch orientierten Struktur beschichtet. Dabei wurde der erste Strich als dünner Haftstrich mit einer üblichen PVC/Weichmacherdispersion eines Flächengewichts von 40 - 100 g/m² ausgeführt. Hierzu wurde die Dispersion in einem Gelierkanal bei einer Temperatur von ca. 165 °C verfestigt. Zur Verbesserung der Haftung wurden im Bedarfsfall übliche Haftvermittlersysteme auf Basis von Polyurethanen eingesetzt. Anschließend wurde in analoger Weise ein weiterer, dickerer Strich mit einem Flächengewicht von 70 - 500 g/mm² aufgebracht, der, zur Aufnahme der Narbstruktur, eine gute thermische Verformbarkeit aufwies. Anschließend wurde die Beschichtungsseite mit einem einschichtigen Lackauftrag versehen. Hierbei wurde ein für PVC-Materialien üblicher Lack eingesetzt, z. B. eine wässrige Dispersion aus PUR/Acrylat/PVC-Polymeren mit üblichen Mattierungsmitteln. Die Rückseite des Bändergeleges wurde auf gleiche Weise. Da auf der Rückseite glatt keine Narbstruktur gebildet wurde, wurde der 2. Strich abweichend vom ersten dünner, mit einem Flächengewicht von 70 - 200 g/m² gestaltet.

Im Vergleich zu nach dem Stand der Technik hergestellten Flächengebilden, konnte auf diese Weise eine Reduktion des Flächengewichts von 40 % und einer Reduktion der Materialdicke von ca. 0,1 mm von ca. 0,60 mm auf ca. 0,50 mm erreicht werden, ohne dass hierbei die Untergrundstruktur des Trägermaterials sichtbar geworden wäre. Ferner konnte beobachtet werden, dass sich die Narbenstruktur auch bei den gewählten Temperaturen einfach fixieren ließ, was bei bisher verwendeten Verfahren nicht möglich war.

### Beispiel 2

Ein Bändergelege wie in Beispiel 1 wurde auf Vorder- u. Rückseite mit jeweils nur einem Strich beschichtet. Der Vorderseitenstrich wurde mit einer Auflage von 130 - 200 g/m² ausgeführt, der Rückseitenstrich mit 90 - 150 g/m². Die Schichtdicke des in Beispiel 1 beschriebenen Materials konnte auf dieser Weise auf unter 0,45 mm gesenkt werden.

### Beispiel 3

Es wurde auf eine Rückseitenbeschichtung verzichtet. Durch die ausschließliche Beschichtung der Vorderseite, die wie in Beispiel 2 erfolgte, wurde eine Schichtdicke von weniger als 0,35 mm erreicht.

### Beispiel 4

Auf ein Bändergelege gemäß Beispiel 1 wurde eine wässrige High -Solid Dispersion mit einer Abmischung von PUR/Acrylat/PVC, entsprechend Ausführungsbeispiel 2, aufgetragen. Die besondere Ebenheit des Bändergeleges ermöglichte hierbei bei Anwendung der Auflagen im beschriebenen Minimalbereich eine effiziente bläschenfreie Trocknung.

## Patentansprüche

1. Verwendung eines Flächengebildes mit einem Schichtaufbau, umfassend zumindest ein im Wesentlichen glattes Geflecht als Trägermaterial und zumindest eine Beschichtung auf zumindest einer Seite des Geflechts, wobei das Geflecht eine einfache Flächenstruktur ist, die aus Bändern in Kettrichtung und in Schussrichtung besteht, die in einer oder mehreren Lagen verflochten sind und wobei die Bänder eine Breite in einem Bereich von 0,1-25 mm, vorzugsweise 0,2-10 mm, besonders bevorzugt 0,5-5 mm, und eine Dicke in einem Bereich von 5-50 % der Breite, vorzugsweise 10-30 % der Breite aufweisen,
- als Rollomaterial für eine Laderaumabdeckung von Fahrzeugen und/oder
- als Kaschiermaterial für Innenraumflächen von Fahrzeugen.

2. Verwendung nach Anspruch 1, wobei die Bänder in Kettrichtung eine um den Faktor 0,75 bis 1,5 unterschiedliche Dicke und/oder eine um den Faktor 0,1 bis 10 unterschiedliche Breite aufweisen als die Bänder in Schussrichtung und/oder die jeweiligen Bänder in Kett- bzw. Schussrichtung sich in der Dicke um einen Faktor von höchstens 1,5 und in der Breite um einen Faktor von höchstens 10 voneinander unterscheiden.

3. Verwendung nach einem der vorangehenden Ansprüche, wobei die Bänder im Wesentlichen parallel zur Längs- bzw. Querrichtung des Flächengebildes verlaufen oder in einem Winkel von etwa 45° zur Längs- bzw. Querrichtung des Flächengebildes angeordnet sind.

4. Verwendung nach einem der vorangehenden Ansprüche, wobei das Geflecht aus 0,25 bis 4 mal mehr Bändern in Kett- als in Schussrichtung, bezogen auf die gleiche Strecke, besteht.

5. Verwendung nach einem der vorangehenden Ansprüche, wobei entlang jeweils eines Bandes in Kett- und/oder Schussrichtung bis zu vier senkrecht angeordnete Bänder unverflochten vorliegen können.

6. Verwendung nach Anspruch 1, wobei die Beschichtung zumindest ein Polymer umfasst, vorzugsweise Weich-PVC, Polyurethan, Acrylat und/oder flexibles Silikon.

7. Verwendung nach einem der vorangehenden Ansprüche, wobei die Beschichtung ein Flächengewicht in einem Bereich von 10 - 1.000 g/m² hat, vorzugsweise im Bereich von 30 - 600 g/m².

8. Verwendung nach einem der vorangehenden Ansprüche, wobei die Bänder zumindest ein Polymermaterial, vorzugsweise Polyester, Polypropylen, Polyamid, Polycarbonat, Celluloseacetobutyrat und/oder Polyacrylat und/oder ein vorzugsweise modifiziertes Naturmaterial, umfassen.

9. Verwendung nach Anspruch 8, wobei das Polymermaterial Celluloseacetobutyrat ist.

## Claims

1. Use of a sheetlike structure having a layer construction, comprising at least one substantially smooth braid as carrier material and at least one coating on at least one side of the braid, the braid being a simple sheetlike construct consisting of tapes in warp direction and in weft direction which are woven in one or more plies, where the tapes have a width in a range of 0.1-25 mm, preferably 0.2-10 mm, more preferably 0.5-5 mm, and a thickness in a range of 5-50% of the width, preferably 10-30% of the width,
- as roller material for a luggage compartment cover in vehicles
and/or
- as liner material for interior surfaces in vehicles.

2. Use according to Claim 1, where the tapes in warp direction have a thickness that is different by a factor of 0.75 to 1.5 and/or a width which is different by a factor of 0.1 to 10 from the tapes in weft direction and/or the respective tapes in warp and weft directions differ from one another in thickness by a factor of at most 1.5 and in width by a factor of at most 10.

3. Use according to either of the preceding claims, where the tapes run substantially parallel to the longitudinal or transverse direction of the sheetlike structure or are arranged at an angle of about 45° to the longitudinal or transverse direction of the sheetlike structure.

4. Use according to any of the preceding claims, where the braid consists of 0.25 to 4 times more tapes in warp direction than in weft direction, based on the same linear extent.

5. Use according to any of the preceding claims, where there may be up to four perpendicularly arranged tapes unwoven along each tape in warp and/or weft direction.

6. Use according to Claim 1, where the coating comprises at least one polymer, preferably plasticized PVC, polyurethane, acrylate and/or flexible silicon.

7. Use according to any of the preceding claims, where the coating has a surface weight in a range of 10-1000 g/m², preferably in the range of 30-600 g/m².

8. Use according to any of the preceding claims, where the tapes comprise at least one polymer material, preferably polyester, polypropylene, polyamide, polycarbonate, cellulose acetobutyrate and/or polyacrylate and/or a preferably modified natural material.

9. Use according to Claim 8, where the polymer material is cellulose acetobutyrate.

## Revendications

1. Utilisation d'une structure plate ayant une structure stratifiée, comprenant au moins un entrelacement essentiellement lisse en tant que matériau de support et au moins un revêtement sur au moins un côté de l'entrelacement, l'entrelacement étant une structure plate simple qui est constituée de rubans dans le sens de chaîne et dans le sens de trame, qui sont entrelacés en une ou plusieurs couches et les rubans ayant une largeur dans une plage de 0,1-25 mm, de préférence 0,2-10 mm, de façon particulièrement préférée 0,5-5 mm, et une épaisseur dans une plage de 5-50 % de la largeur, de préférence 10-30 % de la largeur,
- en tant que matériau de sore pour un recouvrement de compartiment à marchandises de véhicules et/ou
- en tant que matériau de revêtement pour surfaces intérieures de véhicules.

2. Utilisation selon la revendication 1, dans laquelle les rubans dans le sens de chaîne ont une épaisseur différant du facteur 0,75 à 1,5 et/ou une largeur différant du facteur 0,1 à 10 par rapport aux rubans dans le sens de trame et/ou les rubans respectifs dans le sens de chaîne ou respectivement de trame diffèrent les uns des autres quant à l'épaisseur d'un facteur d'au maximum 1,5 et quant à la largeur d'un facteur d'au maximum 10.

3. Utilisation selon l'une quelconque des revendications précédentes, dans laquelle les rubans sont essentiellement parallèles au sens longitudinal ou, respectivement, transversal de la structure plate ou sont disposés en un angle d'environ 45° par rapport au sens longitudinal ou, respectivement, transversal de la structure plate.

4. Utilisation selon l'une quelconque des revendications précédentes, dans laquelle l'entrelacement est constitué de 0,25 à 4 fois plus de rubans dans le sens de chaîne que dans le sens de trame, sur la base de la même étendue.

5. Utilisation selon l'une quelconque des revendications précédentes, dans laquelle jusqu'à quatre rubans disposés verticalement peuvent se trouver non entrelacés le long d'un ruban dans le sens de chaîne et/ou le sens de trame.

6. Utilisation selon la revendication 1, dans laquelle le revêtement comprend au moins un polymère, de préférence un PVC souple, polyuréthane, acrylate et/ou silicone flexible.

7. Utilisation selon l'une quelconque des revendications précédentes, dans laquelle le revêtement a un poids par unité de surface dans une plage de 10 - 1 000 g/m², de préférence dans la plage de 30 - 600 g/m².

8. Utilisation selon l'une quelconque des revendications précédentes, dans laquelle les rubans comprennent au moins un matériau polymère, de préférence un polyester, polypropylène, polyamide, polycarbonate, acétobutyrate de cellulose et/ou polyacrylate et/ou un matériau naturel de préférence modifié.

9. Utilisation selon la revendication 8, dans laquelle le matériau polymère est l'acétobutyrate de cellulose.
